Europäisches Patentamt

European Patent Office

Office européen des brevets

(19)

(11) Veröffentlichungsnummer: **0 359 025**

**A1**

## EUROPÄISCHE PATENTANMELDUNG

(21) Anmeldenummer: 89115939.4

(22) Anmeldetag: 29.08.89

(51) Int. Cl.5. **C02F 3/34 , C02F 3/12 , C02F 3/30**

(30) Priorität: 14.09.88 DD 319785
23.06.89 DD 331716

(43) Veröffentlichungstag der Anmeldung:
**21.03.90 Patentblatt 90/12**

(84) Benannte Vertragsstaaten:
**AT BE CH DE ES FR GB IT LI NL SE**

(71) Anmelder: **VEB PROJEKTIERUNG**
**WASSERWIRTSCHAFT**
**Thälmannplatz 2**
**DDR-4002 Halle/Saale(DD)**

(72) Erfinder: **Friedrich, Eberhard, Dr.-Ing.**
**Elsterwerdaer-Strasse 38**
**DDR-8036 Dresden(DD)**
Erfinder: **Schramm, Gottfried, Dr.-Ing.**
**Auersbergerstrasse 15**
**DDR-1148 Berlin(DD)**
Erfinder: **Holesovsky, Ulrich, Dr.-Ing.**
**Hanoier-Strasse 69**
**DDR-4070 Halle/S.(DD)**
Erfinder: **Richard, Peter, Dipl.-Ing.**
**Block 516/2**
**DDR-4090 Halle-Neustadt(DD)**
Erfinder: **Ehrig, Steffen, Dr.-Ing.**

**Stollstrasse 35**
**DDR-8028 Dresden(DD)**
Erfinder: **Jobst, Karin, Dr.-Ing.**
**Reichenbergerstrasse 9**
**DDR-8122 Radebeul(DD)**
Erfinder: **Blobel, Hans-Jürgen, Dr.-Ing.**
**Martin-Andersen-Nexö-Strasse 36**
**DDR-8020 Dresden(DD)**
Erfinder: **Kutzsche, Friedrich**
**Franz-Mehring-Strasse 24**
**DDR-8045 Dresden(DD)**
Erfinder: **Koschade, Gerda, Dipl.-Chem.**
**Bannewitzer-Strasse 34**
**DDR-8210 Freital(DD)**
Erfinder: **Friedrich, Hannelore, Dr.-Ing.**
**Elsterwerdaer-Strasse 38**
**DDR-8036 Dresden(DD)**
Erfinder: **Nitzsche, Rolf, Dr.sc.nat.**
**Waldstrasse 60**
**DDR-Kirschau(DD)**

(74) Vertreter: **Spott, Gottfried, Dr. et al**
**Patentanwälte Spott und Puschmann**
**Sendlinger-Tor-Platz 11**
**D-8000 München 2(DE)**

(54) **Verfahren zur mesophilen oder thermophilen aerobenzymatischen Konditionierung von flüssigen organischen Stoffen und Biomasse.**

(57) Die Erfindung betrifft die Konditionierung von flüssigen organischen Stoffen und Biomasse, insbesondere von kommunalen Klärschlämmen mit Hilfe von Chelatbildnern und Enzymen.

Erfindungsgemäß wird der Prozeß der Aufspaltung der organischen Substanz im aeroben Konditionierungsreaktor, unter Zugabe von Chelatbildnern und Enzymen, vor deren vollständigen Auflösung nach einer Zeit von 0,5 bis 20 Stunden abgebrochen. Anschließend wird das Stoffgemisch einer unbelüfteten, offenen Nachreaktionsphase von 5 bis 15 Stunden ausgesetzt, wo eine biogene Flockenbildung erfolgt. Anschließend wird eine Fest-Flüssig-Trennung durchgeführt. Zur Beschleunigung der Nachreaktionen können Konditionierungsmittel zugesetzt werden. Die biogene Flockenbildung und die Entgasung im Nachreaktionsbehälter können durch Umrühren oder eine Temperaturerhöhung verbessert werden.

Der entwässerte Schlamm besitzt einen hohen Heizwert. Er ist landwirtschaftlich gut verwertbar.

## Verfahren zur mesophilen oder thermophilen aerobenzymatischen Konditionierung von flüssigen organischen Stoffen und Biomasse

Die Erfindung betrifft die Konditionierung von flüssigen organischen Stoffen, insbesondere vom kommunalen Abwasserschlämmen mit Hilfe von Chelatbildnern und Enzymen.

Die seit einigen Jahren bekannten Verfahren zur Schlammbehandlung unter Verwendung von Enzymen ermöglichen eine wesentliche Verkürzung der Stabilisierungszeiten gegenüber herkömmlichen Verfahren. Die Patentliteratur beinhaltet mehrere Verfahren, die den Abbau organischer Stoffe unter Verwendung von Enzymen in einer bestimmten, auf die Masse der Trockensubstanz bezogenen Menge, beschreiben. Aufgabe der bekannten enzymatischen Verfahren ist es, den zu behandelnden Belebtschlamm möglichst schnell zu einer stabilisierten Form abzubauen. Dabei sollen mit geringen Mengen von Fremdenzymen hohe Abbauleistungen bei positiver Beeinflussung der Entwässerungseigenschaften der enzymatisch behandelten Schlämme erreicht werden.

Bei dem Verfahren gemäß Patentschrift GB 1563335 werden 0,001 - 15 % feinzerteilte Trockensubstanz und bis 5 % der Trockensubstanz hinzugefügte Enzyme sowie thermophile Mikroorganismen in einen Reaktionsbehälter geführt und belüftet, wobei der Schlamm kontinuierlich bei einer Temperatur von 50 bis 70°C gehalten wird.

Die Offenlegungsschrift DE 2633514 betrifft ein Verfahren zur Steigerung der Filtrierbarkeit und Sedimentationsneigung einer Aufschlämmung, wobei der Aufschlämmung unter Rühren ein Enzym oder eine Enzymgruppe zugesetzt wird.

Das US-Patent 4267049 beschreibt die Umwandlung von behandeltem Schlamm zu verwertbaren Substanzen durch Hydrolyse des im Schlamm vorhandenen organischen Materials durch Zugabe von mindestens einem hydrolytischen Enzym und hydrolytische Enzyme produzierender Mikroorganismen zum Schlamm, Selbstüberlassung mindestens eines Schlammes mit Enzymen oder Mikroorganismen und anschließend Trennung der Aufschlämmung in einem Abfluß und ein Feuchtprodukt.

Gemäß DD-Patent 234 571 ist ein Verfahren bekannt, bei welchem bei enzymatisch zu behandelnden organischen Stoffe und die Biomasse einem Reaktionsmedium zugeführt werden, das je nach der Art und der Zusammensetzung der enzymatisch zu behandelnden organischen Stoffe und der Biomasse 0,01 bis 1 Masseprozent hinzugefügte hydrolytische Enzyme und 0,005 bis 0,5 Masseprozent eines Chelatbildners, bezogen auf die Masse der organischen Trockensubstanz enthält und eine Temperatur von 30 bis 60°C aufweist.

Das Reaktionsmedium stellt eine wässrige Lösung enzymatisch bereits behandelter organischer Stoffe, wie Klärschlamm bzw. Gülle oder von Biomasse, wie Belebtschlamm bzw. Mikroorganismenkulturen, dar.

Werden diesem Reaktionsmedium organische Stoffe und Biomasse zugeführt, so kommt es durch die anwesenden hydrolytischen Enzyme rasch zu einer Hydrolyse der in den organischen Stoffen und der Biomasse enthaltenen organischen Makromoleküle (Kohlenhydrate, Eiweiße, Fette) zu mikrobiell leicht verwertbaren niedermolekularen Verbindungen (Zucker, organische Säuren). Diese stehen den mit den organischen Stoffen und den als Biomasse dem Reaktionsmedium zugeführten Mikroorganismen zur Verwertung sofort zur Verfügung, so daß deren biochemische Aktivität dadurch stimuliert wird. Der im Reaktionsmedium enthaltene Chelatbildner beeinflußt die Stoffwechseltätigkeit der Mikroorganismen dahingehend, daß er durch seine permeabilisierende Wirkung eine starke einseitige Förderung ihrer Atmung auslöst und den Stoffaustausch durch ihre Zellwände beschleunigt. Durch die plötzliche Zuführung der ein um mindestens 10°C geringeres Temperaturniveau aufweisenden organischen Stoffe und der Biomasse in das 30 bis 60°C warme Reaktionsmedium kommt es infolge des auftretenden Temperaturshifts zur verstärkten Abgabe von Exoenzymen durch die Mikroorganismen an das Reaktionsmedium und zur Auslösung von Prozessen zur Mikroorganismenselbstauflösung (Autolyse) und zur Mikroorganismenversporung. Durch die additive Wirkung der hydrolytischen Enzyme, des Chelatbildners und des Temperaturshifts wird ein schneller Abbau biologisch abbaubarer Stoffe und von Biomasse bzw. ein gesteigerter Stoffaustausch durch die Mikroorganismenzellwände sowie eine erhöhte Produktion von Metaboliten ihres Stoffwechsels (Enzyme, Vitamine, organische Säuren, Antibiotika u.a.) erzielt.

Zur Entwässerung von Schlamm aus Kläranlagen werden neben der natürlichen Entwässerung bekannterweise auch Zentrifugen als eine Methode der maschinellen Schlammentwässerung angewendet. Der Einsatz von größeren Mengen polymerer Flockungsmittel ist erforderlich, um eine relativ hohe Feststoffkonzentration im Zentrifugenaustrag und eine möglichst geringe Zentratkonzentration zu erhalten.

Aussagen zum Entwässerungsverhalten konnten bisher nur durch aufwendige großtechnische Entwässerungsversuche gewonnen werden. Die bisher im Labormaßstab ermittelten Kennwerte (Filterwiderstand, CST-Wert usw.) ließen nur bedingt eine Einschätzung des Entwässerungsverhaltens zu. Mittels granulometrischer Messungen sowie der Erfassung des Oberflächenpotentials werden hingegen Zustandsaussagen gewonnen, die eine Abschätzung des Entwässerungsergebnisses gestatten.

Trotz des Einsatzes kostenintensiver Flokkungsmittel wird oft kein Trockensubstanzgehalt im Zentrifugenaustrag erreicht, der eine anschließende Schlammverbrennung ohne Zusatzbrennstoffe ermöglicht.

Bei der Schlammverbrennung wird das Volumen des Schlammes auf ein Mindestmaß reduziert. Die verbleibende Asche ist steril und kann leicht endgültig beseitigt werden. Bei den bekannten Verfahren der Schlammverbrennung wird sowohl frischer Belebtschlamm der Verbrennung zugeführt, wobei meist erhebliche Mengen Zusatzbrennstoff erforderlich werden, als auch ausgefaulter Schlamm.

Die Verbrennung von ausgefaultem Schlamm erfordert zusätzliche Energie, wenn der Wassergehalt des Schlammkuchens zu hoch ist. Zum Anfahren ist in jedem Fall ein Zusatzbrennstoff notwendig. Erhebliche Aufwendungen für Zusatzbrennstoffe und Energie lassen die bekannten Methoden der Schlammverbrennung zu einer kostenintensiven Verfahrensweise werden, die sich aber nicht zuletzt bei territorialen Deponieproblemen gegenwärtig und künftig erforderlich macht.

Bekannt ist gemäß Offenlegungsschrift DE 3429055 ein Verfahren zur Beseitigung von Schlämmen, insbesondere von Klärschlamm, wobei ein Teil des Dickschlammes in einem Trockner auf einen bestimmten Trockensubstanzgehalt vorgetrocknet und der restliche Dickschlamm unter Zuführung des Trockengutes verbrannt wird.

Die Offenlegungsschrift DE 2916216 beschreibt ein Verfahren zur Verwertung von Schlämmen, bei welchem der Schlamm eingedickt, unter Zusatz einer bestimmten Menge Feinkohle konditioniert, dann einer Filterpresse zugeführt und anschließend verascht wird.

Die aufgezeigten Nachteile bei der Behandlung von Schlämmen in Hinblick auf ihre Vorbereitung zur Verbrennung werden durch die letztgenannten Verfahren nur teilweise positiv beeinflußt.

Die Aufgabe der Erfindung besteht darin, ein Verfahren zu entwickeln, mit dem flüssige organische Stoffe, vorzugsweise Abwässerschlämme, bei einer extrem kurzen Reaktionsdauer und unter Verwendung von Chelatbildnern und Enzymen derart behandelt werden, daß deren Partikelgrößen und Oberflächenaktivitäten eine biogene Flockung ermöglichen und die Feststoffe in einer nachgeschalteten Entwässerungsstufe von der flüssigen Phase leichter abgetrennt werden können. Die Endprodukte sollen gut selbstgängig kompostierbar oder mit einem hohen Heizwert verbrennbar sein.

Erfindungsgemäß wird die Aufgabe dadurch gelöst, daß die zu behandelnden flüssigen organischen Stoffe auf bekannte Weise in einem Bioreaktor mit 0,001 %, bezogen auf den organischen Anteil der Trockensubstanz, eines Chelatbildners, vorzugsweise eines Salzes der Nitrilotriessigsäure und mit 0,001 bis 1,5 %, bezogen auf den organischen Anteil der Trockensubstanz, eines die organischen Komponenten der enthaltenen Feststoffe spaltenden Enzymes oder Enzymgemisches versetzt und intensiv belüftet werden. In dieser Phase erfolgt eine Aufspaltung der organischen Substanz in kleinere Schlammpartikelgrößen und höhere spezifische Partikeloberflächen bei gleichzeitiger Erhöhung der Oberflächenaktivität. Erfindungsgemäß wird der Prozeß der Aufspaltung der Substanz abgebrochen, wenn ca. 30 ... 50 % der Teilchen < 1 m und 40 ... 70 % der Teilchen < 5 m sind, sowie der Wert der Oberflächenladung der Schlammpartikel gegenüber Rohschlamm um ca. 15 ... 30 % höher ist. Zu diesem Zeitpunkt besitzen die Schlämme noch eine hohe Dispersionsstabilität. Das geschieht nach einer Reaktionszeit von 0,5 bis 20 h. Das so behandelte Stoffgemisch wird anschließend in einem nachgeschalteten Reaktor einer unbelüfteten Nachreaktionsphase von 5 bis 15 h ausgesetzt. Die Möglichkeit einer Entgasung ist vorgesehen, was durch eine offene Bauweise des Nachreaktionsbehälters erreicht wird. In dieser Nachreaktionsphase erfolgt die biogene Flockenbildung der oberflächenaktiven Schlammpartikel bei gleichzeitiger Entstabilisierung der Dispersion. Um die nachfolgende maschinelle Entwässerung optimal zu gestalten, ist die Nachreaktion abzubrechen wenn nur noch 15 ... 20 % der Teilchen < 1 m und 30 ... 40 % der Teilchen < 5 m sind, wobei die Oberflächenladung gleichzeitig ein Minimum durchläuft. Die noch verbleibende Differenz an Oberflächenladung bis zur Einstellung des isoelektrischen Punktes kann im Interesse einer weiteren Reduzierung des Einsatzes an polymeren Flockungsmitteln im Gegensatz zur üblichen Praxis durch Zugabe von geeigneten anorganischen Substanzen erfolgen.

Anschließend erfolgt eine Fest-Flüssig-Trennung mit bekannten Mitteln, z.B. mit Dekanterzentrifugen oder Schwerkrafteindickern.

Zur Beschleunigung der Aggregation und Verkürzung der Nachreaktionszeit kann die Nachreaktionsphase in einem erhöhten Temperaturbereich von 20 ... 38 °C oder 45 ... 75°C erfolgen. Die Temperaturerhöhung bewirkt eine Herabsetzung der Oberflächenspannungen, wodurch auch die Entgasung beschleunigt wird. Gleichzeitig wird die Stabilität der Flocken erhöht. Weiterhin kann ein Teilstrom des zu behandelnden Stoffgemisches vor der Belüftung abgezogen und derart aufbereitet werden, daß die enthaltenen Eigenenzyme freigesetzt werden, was z.B. mittels Kugelmühlen erfolgen kann. Anschließend wird dieser Teilstrom ebenfalls dem aeroben Reaktionsprozeß zugeführt. Dadurch wird eine Reduzierung der Fremdenzymzugabe erreicht. Der Konditionierungsprozeß wird durch die Zugabe von Wirkstoffen (Enzyme, Chelatbildner) stark beschleunigt. Im Verlauf der enzymatischen Transformationsprozesse wird biologisch abbaubare Substanz lediglich partiell eliminiert (ca. 8 % gegenüber ca. 30 % bei der Schlammfaulung und ca. 15 ... 20 % bei der enzymatischen Schlammstabilisierung).

Der für den Konditionierungsprozeß erforderliche Temperaturbereich im aeroben Reaktor (25 ... 38°C) wird vorzugsweise durch Ausnutzung exothermer Stoffwechselprozesse der im Schlamm enthaltenen Mikroorganismen erreicht.

Dazu ist es notwendig, Luftsauerstoff mittels geeigneter Begasungseinrichtung in den Reaktor einzutragen und den Reaktorinhalt ständig mittels geeigneter Fördereinrichtungen, wie z.B. Kreiselpumpen, umzuwälzen. Alternativ kann der genannte Temperaturbereich durch Zuführung von Fremdenergie in den aeroben Reaktor realisiert werden.

Mit dem Verfahren werden bei einer kurzen Reaktionsdauer und mit geringsten Mengen an Chemikalien die normalerweise erheblichen Aufwendungen für die Schlammbeseitigung wesentlich verringert.

Die Erfindung wird nachfolgend an vier Beispielen näher erläutert.


1. Beispiel

Rohschlamm einer kommunalen Kläranlage mit einem Feststoffgehalt von 4 % wird in einem Rohschlammstapelbehälter homogenisiert. Anschließend wird der Rohschlamm quasikontinuierlich über eine flexible Rohrleitung mit induktiver Durchflußmengenmessung und einer Rohschlammbeschickungspumpe dem aeroben Konditionierungsreaktor zugeführt. Dabei erfolgt die Zugabe von 60 g des in ca. 30 l Leitungswasser vorgelösten Triammoniumsalzes der Nitrilotriessigsäure. Weiterhin werden je Kubikmeter chelatbildnerhaltigen Rohschlammes 60 g eines in ca. der 100-fachen Menge Leitungswasser vorgelösten komplexen Enzympräparates, das $\beta$-Glucanase, Amylasen, Proteasen und Lipasen enthält, ständig zudosiert. Etwa ein Zehntel des Rohschlammes wird vor der Zugabe in den aeroben Reaktor in einer Kugelmühle behandelt. Hier erfolgt die Freisetzung von Eigenenzymen, womit die Zugabemenge von Fremdenzymen verringert wird. Von einem Intensivbelüfter wird der Schlamm im Konditionierungsreaktor kontinuierlich umgewälzt und mit Sauerstoff versorgt.

Bei einer diskontinuierlichen Belüftung wird zusätzlich eine Umwälzung mittels einer Kreiselpumpe durchgeführt. Die Schlammtemperatur des Rohschlammes wird durch die exothermen Stoffwechselprozesse der im Schlamm enthaltenen Mikroorganismen von 20°C auf ca. 30°C erhöht und bleibt annähernd konstant. Durch die biologischen Stoffwechselprozesse und die mechanische Beanspruchung durch den Intensivbelüfter erfolgt eine Aufspaltung der organischen Substanz in kleinere Partikelgrößen der Schlammteilchen und höhere spezifische Partikeloberflächen.

Die Aufspaltung der organischen Substanz im Konditionierungsreaktor erfolgt nicht wie bei der enzymatischen Schlammstabilisierung bis zu deren vollständigen Auflösung. Der Prozeß wird nach 4 Stunden abgebrochen. Zu diesem Zeitpunkt besitzen die verkleinerten Schlammpartikel eine hohe Oberflächenaktivität.

Der so vorbehandelte Schlamm wird nach Zugabe von kationischen polymeren Flockungshilfsmitteln (Zetag 92, Fa. ACM/BRD) in einen offenen Nachreaktionsbehälter überführt. Es erfolgt einer intensive Aggregation der Schlammpartikel. Außer der Umwälzung wird die Entgasung durch eine erhöhte Temperatur von etwa 38°C durch Fremderwärmung beschleunigt. Gleichzeitig wird dadurch die Aggregation beschleunigt.

Nach 10 Stunden Nachreaktionsdauer wird der behandelte Schlamm einer mobilen Dekanterzentrifugenanlage zugeführt und entwässert.

Der Abscheidegrad der Feststoffe beträgt 97 - 99 %. Das anfallende Schlammwasser mit einem Trockensubstanzgehalt von weniger als 0,1 Masse-% Trockensubstanz wird dem Zulauf einer Abwasserbehandlungsanlage zugeleitet. Der entwässerte Schlamm besitzt einen Trockensubstanzgehalt von ca. 32 Masse-% Trockensubstanz und somit einen hohen Heizwert, eine feinstkrümelige Struktur und eine geringe Wasserwiederaufnahmefähigkeit. Er ist fast vollständig geruchsfrei. Der hohe Heizwert ermöglicht eine Verbrennung ohne (energieautarke Verbrennung) bzw. mit stark reduziertem Einsatz zusätzlicher Energie.

Unter Berücksichtigung der Schwermetallgrenzkonzentration kann der entwässerte Schlamm mit einem hohen Anteil P und N landwirtschaftlich direkt verwertet, kompostiert oder deponiert werden.


2. Beispiel

Rohschlamm einer kommunalen Kläranlage mit einem Feststoffgehalt von 4 % wird in einem Rohschlammstapelbehälter homogenisiert. Anschließend wird der Rohschlamm quasikontinuierlich über eine flexible Rohrleitung mit induktiver Durchflußmengenmessung und einer Rohschlammbeschickungspumpe dem aeroben Konditionierungsreaktor zugeführt. Dabei erfolgt die Zugabe von 60 g des in ca. 30 l Leitungswasser vorgelösten Triammoniumsalzes der Nitrilotriessigsäure. Weiterhin werden je Kubikmeter chelatbildnerhaltigen Rohschlammes 60 g eines in ca. der 100-fachen Menge Leitungswasser vorgelösten komplexen Enzympräparates, das $\beta$-Glucanase, Amylasen, Proteasen und Lipasen enthält, ständig zudosiert. Etwa ein Zehntel des Rohschlammes wird vor der Zugabe in den aeroben Reaktor in einer Kugelmühle behandelt. Hier erfolgt die Freisetzung von Eigenenzymen, womit die Zugabemenge von Fremdenzymen verringert wird. Von einem Intensivbelüfter wird der Schlamm im Konditionierungsreaktor kontinuierlich umgewälzt und mit Sauerstoff versorgt.

Bei einer diskontinuierlichen Belüftung wird zusätzlich eine Umwälzung mittels einer Kreiselpumpe durchgeführt. Die Schlammtemperatur des Rohschlammes wird durch die exothermen Stoffwechselprozesse der im Schlamm enthaltenen Mikroorganismen von 20°C auf ca. 30°C erhöht und bleibt annähernd konstant. Durch die biologischen Stoffwechselprozesse und die mechanische Beanspruchung durch den Intensivbelüfter erfolgt eine Aufspaltung der organischen Substanz in kleinere Partikelgrößen der Schlammteilchen und höhere spezifische Partikeloberflächen.

Die Aufspaltung der organischen Substanz im Konditionierungsreaktor erfolgt nicht wie bei der enzymatischen Schlammstabilisierung bis zu deren vollständigen Auflösung.

Der Prozeß wird nach 4 Stunden abgebrochen. Zu diesem Zeitpunkt besitzen die verkleinerten Schlammpartikel eine hohe Oberflächenaktivität.
Der so vorbehandelte Schlamm wird in einen offenen Nachreaktionsbehälter überführt. Infolge der hohen Oberflächenaktivität der Schlammpartikel vollzieht sich eine Rückaggregation der Schlammteilchen. Aufgrund der während der Reaktionsphase gebildeten feinen Primärteilchen können so scherstabile Agglomerate gebildet werden. Die Entgasung wird durch eine erhöhte Temperatur von etwa 38°C durch Fremderwärmung beschleunigt. Gleichzeitig verläuft so die Aggregation schneller. Nach 10 Stunden Nachreaktionsdauer wird der Schlamm nach einer Zudosierung von Primärflockungsmitteln ($FeCL_3$) mit kationischen polymeren Flockungsmitteln versetzt (Zetag 92, Fa. ACM/BRD) und maschinell (z.B. Dekanter) entwässert.

Der Abscheidegrad der Feststoffe beträgt 97 - 99 %. Das anfallende Schlammwasser mit einem Trockensubstanzgehalt von weniger als 0,1 Masse-% Trockensubstanz wird dem Zulauf einer Abwasserbehandlungsanlage zugeleitet. Der entwässerte Schlamm besitzt einen Trockensubstanzgehalt von ca. 32 Masse-% Trockensubstanz und somit einen hohen Heizwert, eine feinkrümelige Struktur und eine geringe Wasserwiederaufnahmefähigkeit. Er ist fast vollständig geruchsfrei. Der hohe Heizwert ermöglicht eine Verbrennung ohne (energieautarke Verbrennung) bzw. mit stark reduziertem Einsatz zusätzlicher Energie.

Unter Berücksichtigung der Schwermetallgrenzkonzentration kann der entwässerte Schlamm mit einem hohen Anteil P und N landwirtschaftlich direkt verwertet, kompostiert oder deponiert werden.

### 3. Beispiel

Rohschlamm einer kommunalen Kläranlage mit schwer abbaubaren Inhaltsstoffen mit einem Feststoffgehalt von 3 % wird in einem Rohschlammstapelbehälter homogenisiert.

Anschließend wird der Rohschlamm quasikontinuierlich über eine flexible Rohrleitung mit induktiver Durchflußmengenmessung und einer Rohschlammbeschickungspumpe dem aeroben Konditionierungsreaktor zugeführt. Dabei erfolgt die Zugabe von 60 g des in ca. 30 l Leitungswasser vorgelösten Triamoniumsalzes der Nitrilotriessigsäure. Weiterhin werden je Kubikmeter chelatbildnerhaltigen Rohschlammes 60 g eines in ca. der 100-fachen Menge Leitungswasser vorgelösten komplexen Enzympräparates, das $\beta$-Glucanase, Amylasen, Proteasen und Lipasen enthält, ständig zudosiert. Etwa ein Zehntel des Rohschlammes wird vor der Zugabe in den aeroben Reaktor in einer Kugelmühle behandelt. Hier erfolgt die Freisetzung von Eigenenzymen, womit die Zugabemenge von Fremdenzymen verringert wird. Von einem Intensivbelüfter wird der Schlamm im Konditionierungsreaktor kontinuierlich umgewälzt und mit Sauerstoff versorgt.

Bei einer diskontinuierlichen Belüftung wird zusätzlich eine Umwälzung mittels einer Kreiselpumpe durchgeführt. Die Schlammtemperatur wird durch die exothermen Stoffwechselprozesse der im Schlamm enthaltenen Mikroorganismen innerhalb von 20 Stunden von 20°C auf 50°C erhöht. Die biologischen Stoffwechselprozesse und die mechanische Beanspruchung durch den Intensivbelüfter bewirken eine Aufspaltung der organischen Substanz in kleinere Schlammpartikel und höhere genetische Partikeloberflächen. Der so vorbehandelte Schlamm wird in einen offenen Nachreaktionsbehälter überführt. Infolge der hohen Oberflächenaktivität der Schlammpartikel vollzieht sich eine Rückaggregation der Schlammteilchen. Aufgrund der während der Reaktionsphase gebildeten feinen Primärteilchen können so scherstabile Agglomerate gebildet werden.Durch Zufuhr von Fremdenergie wird die Schlammtemperatur von 50°C konstant gehalten, so daß die Aggregation schneller verläuft. Gleichzeitig wird somit die Entgasung beschleunigt.

Nach 15 Stunden Nachreaktionsdauer wird der Schlamm mit kationischen polymeren Flockungsmitteln (Zetag 92,Fa.ACM/BRD) versetzt und maschinell (z.B. Dekanter) entwässert. Der Abscheidegrad der Feststoffe beträgt 97 - 99 %. Das anfallende Schlammwasser mit einem Trockensubstanzgehalt von weniger als 0,1 Masse-% Trockensubstanz wird dem Zulauf einer Abwasserbehandlungsanlage zugeleitet. Der entwässerte Schlamm besitzt einen Trockensubstanzgehalt von ca. 32 Masse-% Trockensubstanz und somit einen hohen Heizwert, eine feinstkrümelige Struktur und eine geringe Wasserwiederaufnahmefähigkeit. Er ist fastvollständig geruchsfrei. Der hohe Heizwert ermöglicht eine Verbrennung ohne (energieautarke Verbrennung) bzw. mit stark reduziertem Einsatz zusätzlicher Energie.

Unter Berücksichtigung der Schwermetallgrenzkonzentration kann der entwässerte Schlamm mit einem hohen Anteil P und N landwirtschaftlich direkt verwertet, kompostiert oder deponiert werden.

### 4. Beispiel

Gülle einer Schweinemastanlage mit einem Feststoffgehalt von 6 % wird in einem Behälter homogenisiert. Anschließend wird die Gülle quasikontinuierlich über eine flexible Rohrleitung mit induktiver Durchflußmengenmessung und einer Beschickungspumpe dem aeroben Konditionierungsreaktor zugeführt. Dabei erfolgt die Zugabe von 60 g des in ca. 30 l Leitungswasser vorgelösten Triammoniumsalzes der Nitrilotriessigsäure. Weiterhin werden je Kubikmeter chelatbildnerhaltiger Gülle 60 g eines in ca. der 100-fachen Menge Leitungswasser vorgelösten komplexen Enzympräparates, das $\beta$-Glucanase, Amylasen, Proteasen und Lipasen enthält, ständig zudosiert. Etwa ein Zehntel der Gülle wird vor der Zugabe in den aeroben Reaktor in einer Kugelmühle behandelt. Hier erfolgt die Freisetzung von Eigenenzymen, womit die Zugabemenge von Fremdenzymen verringert wird. Von einem Intensivbelüfter wird die Gülle in Konditionierungsreaktor 0,5 h kontinuierlich umgewälzt und mit Sauerstoff versorgt.

Bei einer diskontinuierlichen Belüftung wird zusätzlich eine Umwälzung mittels einer Kreiselpumpe durchgeführt.

Die Temperatur wird durch die exothermen Stoffwechselprozesse der im Gülleschlamm enthaltenen Mikroorganismen von 20°C auf ca. 30°C erhöht und bleibt annähernd konstant. Die biologischen Stoffwechselprozesse und die mechanische Beanspruchung durch den Intensivbelüfter erfolgt eine Aufspaltung der organischen Substanz in kleinere Partikelgrößen einhergehend mit einer Vergrößerung der spezifischen Partikeloberfläche.

Die so vorbehandelte Gülle wird in einem offenen Nachreaktionsbehälter überführt. Infolge der hohen Oberflächenaktivität der Schlammpartikel vollzieht sich eine Rückaggregation der Schlammteilchen. Aufgrund der während der Reaktionsphase gebildeten feinen Primärteilchen können so scherstabile Agglomerate gebildet werden. Die Schlammtemperatur beträgt durchschnittlich 25°C. Nach 5 Stunden Nachreaktionsdauer wird der Gülleschlamm nach Zugabe von kationischen polymeren Flockungsmitteln (Zetag 92, Fa.ACM/BRD) versetzt und maschinell (z.B. Dekanter) entwässert. Der Abscheidegrad der Feststoffe beträgt 97 - 99 %. Das anfallende Schlammwasser mit einem Trockensubstanzgehalt von weniger als 0,1 Masse-% Trockensubstanz wird dem Zulauf einer Abwasserbehandlungsanlage zugeleitet. Der entwässerte Schlamm besitzt einen Trockensubstanzgehalt von ca. 32 Masse-% Trockensubstanz und somit einen hohen Heizwert, eine feinstkrümelige Struktur und eine geringe Wasserwiederaufnahmefähigkeit. Er ist fast vollständig geruchsfrei. Der hohe Heizwert ermöglicht eine Verbrennung ohne (energieautarke Verbrennung) bzw. mit stark reduziertem Einsatz zusätzlicher Energie.

Unter Berücksichtigung der Schwermetallgrenzkonzentration kann der entwässerte Schlamm mit einem hohen Anteil P und N landwirtschaftlich direkt verwertet, kompostiert oder deponiert werden.

### Ansprüche

1. Verfahren zur mesophilen oder thermophilen aerobenzymatischen Konditionierung von flüssigen organischen Stoffen und Biomasse, insbesondere kommunalen Abwasserschlämmen, wobei die zu behandelnden flüssigen Stoffe in einem aeroben Konditionierungsreaktor mit 0,001 bis 0,1 %, bezogen auf den organischen Anteil der Trockensubstanz, eines Chelatbildners, vorzugsweise eines Salzes der Nitrilotriessigsäure, und mit 0,001 bis 1,5 %, bezogen auf den organischen Anteil der Trockensubstanz, eines die organischen Komponenten der enthaltenen Feststoffe spaltenden Enzymes oder Enzymgemisches versetzt und intensiv belüftet werden, gekennzeichnet dadurch, daß der aerobe Reaktionsprozeß der Aufspaltung der organischen Substanz in kleinere Partikelgrößen nach einer Reaktionsdauer von 0,5 bis 20 h, d.h. vor deren vollständigen Auflösung, abgebrochen wird, das so behandelte Stoffgemisch einer unbelüfteten Nachreaktionsphase von 5 bis 15 h ausgesetzt, gleichzeitig eine Entgasung ermöglicht wird, und anschließend eine Fest-Flüssig-Trennung erfolgt.

2. Verfahren nach Anspruch 1, gekennzeichnet dadurch, daß ein Teilstrom des zu behandelnden flüssigen Stoffgemisches so aufbereitet wird, daß die Eigenenzyme freigesetzt werden und anschließend dieser Teilstrom den aeroben Reaktionsprozeß zugeführt wird.

3. Verfahren nach den Ansprüchen 1 und 2, gekennzeichnet dadurch, daß dem Stoffgemisch vor oder während der Nachreaktionsphase Konditionierungsmittel, wie z.B. polymere Flockungshilfsmittel und/oder Fällungschemikalien, zugesetzt werden.

4. Verfahren nach den Ansprüchen 1 bis 3, gekennzeichnet dadurch, daß die Nachreaktionsphase in einem erhöhten Temperaturbereich, im mesophilen oder thermophilen Bereich, abläuft.

| | | Europäisches Patentamt | EUROPÄISCHER RECHERCHENBERICHT | Nummer der Anmeldung |
|---|---|---|---|---|
| | | | | EP 89 11 5939 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DD-A- 231 331 (FORSCHUNGSZENTRUM WASSERTECHNIK) <br> * Seite 2, Zeile 27 - Seite 3, Zeile 12 * <br> --- | 1 | C 02 F 3/34 <br> C 02 F 3/12 <br> C 02 F 3/30 |
| X | DD-A- 231 332 (FORSCHUNGSZENTRUM WASSERTECHNIK) <br> * Seite 4, Ansprüche * <br> --- | 1,4 | |
| Y | DE-A-3 441 690 (VEB PROJEKTIERUNG WASSERWIRTSCHAFT) <br> * Seite 6, Zeile 16 - Seite 7, Zeile 6; Seite 8, Zeilen 1-13; Seite 10, Beispiel 3; Seite 13, Beispiel 8 * <br> --- | 1,2 | |
| Y,D | GB-A-1 563 335 (EUROC ADMINISTRATION AB) <br> * Seite 1, Zeilen 14-26; Seite 3, Anspruch 1; Seite 4, Ansprüche 4,8 * <br> --- | 1,2 | |
| A | DE-A-3 045 712 (FORSCHUNGSZENTRUM WASSERTECHNIK) <br> * Seite 3, Zeile 30 - Seite 4, Zeile 4 * <br> --- | 1 | RECHERCHIERTE SACHGEBIETE (Int. Cl.5) <br><br> C 02 F |
| A | EP-A-0 226 787 (W.F. LADENDORF) <br> * Seite 2, Zeilen 7-24; Anspruch 1 * <br> --- | 1,3 | |
| A | DE-A-2 747 807 (MASCHINENFABRIK ZELL J. KRÜCKELS KG) <br> * Seite 8, Zeilen 27-33; Figur 1 * <br> ----- | 1,3 | |

Der vorliegende Recherchenbericht wurde für alle Patentansprüche erstellt

| Recherchenort | Abschlußdatum der Recherche | Prüfer |
|---|---|---|
| DEN HAAG | 23-11-1989 | GONZALEZ Y ARIAS M.L. |